# EUROPEAN PATENT APPLICATION

(11) **EP 3 550 079 A1**
(43) Date of publication of application: **09.10.2019**
(21) Application number: 17875791.0
(22) Date of filing: 18.08.2017
(51) Int. Cl.: E02B 7/20, C02F 11/00, C22B 7/00

(54) **FACILITY FOR DISCHARGING LEACHING RESIDUE SLURRY**

(30) Priority: 01.12.2016 JP 2016233825
(71) Applicant: Sumitomo Metal Mining Co., Ltd., Tokyo 105-8716 (JP)
(72) Inventor: HATTORI Yasumasa, Tokyo 105-8716 (JP); SUZUKI Hitoshi, Tokyo 105-8716 (JP); IIDA Yoshitaka, Tokyo 105-8716 (JP); KAWAGUCHI Yoichi, Tokyo 105-8716 (JP)
(74) Representative: Jones, Nicholas Andrew
(86) International application number: PCT/JP2017/029605
(87) International publication number: WO 2018/100809

(57) **Abstract**

To provide a facility for discharging a leaching residue slurry that allows an effective use of a storage pond, in its entirety, for storage of a leaching residue slurry. A facility for discharging a leaching residue slurry S into a storage pond P includes a discharge unit 10 provided with a floating member 11 floating on a water surface F of the storage pond P and arranged to discharge a leaching residue slurry S, and a feeding unit 2 feeding the leaching residue slurry S to the discharge unit 10. The discharge unit 10 can be disposed to a desired location in the storage pond P by moving the discharge unit 10 on the water surface F of the storage pond P since the discharge unit 10 floats by the floating member 11 on the water surface F of the storage pond P. Thus, the storage pond P can be effectively used, up to the central part thereof, as an area in which the leaching residue slurry S is stored.

## Description

### TECHNICAL FIELD

The present invention relates to a facility for discharging a leaching residue slurry. More particularly, the present invention relates to a facility for discharging a leaching residue slurry into a tailing dam and/or a reservoir.

### BACKGROUND ART

A leaching residue slurry is produced when valuable metal is collected from nickel oxide ore, for example, through an acid leaching process, etc. Generally, the leaching residue slurry has no use value, so that it is discharged and stored in a tailing dam and/or a reservoir (herein after simple referred to as a "dam or the like") for a long period of time with the moisture thereof being separated.

In order to store the leaching residue slurry into the dam or the like, piping provided with a number of discharge ports at regular intervals is placed around the dam or the like to convey the leaching residue slurry through the piping and to discharge it into the dam or the like through the discharge ports. This method is used because if the leaching residue slurry is discharged only from a particular discharge port, the leaching residue slurry discharged from the particular discharge port is accumulated, forming a mountain around the discharge port, which can lead to an ineffective use of the volume of the dam and the like.

In addition, if the accumulated mountain of the leaching residue slurry formed around the discharge port collapses, the discharge port can be buried inside the collapsed mountain. Such an accident requires a lot of labor and time to recover the discharge port and requires temporal termination of conveyance of the leaching residue slurry for the sake of safety operation.

In the method, a number of discharge ports can be provided with respective valves, and thus such a method can select or change locations in the dam or the like where the leaching residue slurry is discharged through the respective discharge ports. This can avoid accumulation of the leaching residue slurry at a particular location in the dam or the like, and can use the volume of the dam or the like effectively.

Advantageously, this method is effective in feeding the leaching residue slurry into a wide area along the circumference of the dam or the like.

Unfortunately, the leaching residue slurry discharged from each of the discharge ports accumulates near the discharge ports, i.e., the water's edge of the dam or the like, since the discharge ports cannot feed the leaching residue slurry to locations in the dam or the like relatively far from the water's edge thereof. If the bottom of the dam and the like declines toward the center thereof, the leaching residue slurry fed into the water can possibly move slowly toward the center of the dam or the like. However, a leaching residue slurry having high specific gravity does not sufficiently move and remains around the discharge ports. This restrictedly defines an area, for the leaching residue slurry to be stored, within a limited zone from the water's edge of the dam and the like, even when the leaching residue slurry is fed from each of the discharge ports. Consequently, it is impossible to sufficiently use the volume of the dam or the like because the leaching residue slurry is not stored in the central area of the dam and the like.

In order to solve such a problem, it can be conceived of providing a method of providing a large number of discharge ports and frequently changing the discharge ports, or a method of feeding a leaching residue slurry into a location in the dam or the like as far as possible from the water's edge of the dam.

In the former method, it is possible to reduce the amount of a leaching residue slurry, having high specific gravity, to be accumulated by a single feeding operation by reducing the amount of the leaching residue slurry to be fed each time from a single discharge port. With this method, it can be easy to move the leaching residue slurry toward the center of the dam or the like even if the leaching residue slurry is fed in the water's edge of the dam. However, this method requires a lot of discharge ports in piping and needs to provide a number of valves corresponding to the number of the discharge ports. This increases the installation cost. In addition, the area in which the leaching residue slurry is discharged is limited in this method, too. Accordingly, once the leaching residue slurry is accumulated in the water's edge, no more leaching residue slurry can be fed, resulting in an insufficient use of the volume of the dam or the like.

In the latter method, on the other hand, it is possible to effectively use the volume of the dam or the like up to the center of the dam because the leaching residue slurry can be discharged directly in the center of the dam or the like. However, this method requires a plurality of branch pipes extending from piping to the center of the dam or the like, requiring a considerable amount of installation cost for the branch pipes. In addition, a discharge port provided to a tip end of the extended branch pipe comes to a location, in the center of the dam or the like, where a discharged leaching residue slurry accumulates. This may cause the discharge port to be buried in the accumulated leaching residue slurry, resulting in a malfunction of the discharge of leaching residue slurry.

There is another method, though this is not for discharging a leaching residue slurry into the dam or the like, which is for pouring leaching residue slurry of solidified processed soil in water for a landfill site such as harbor and which uses a discharge pipe configured to be swung in the up-and-down and left-and-right directions. Such a technique is disclosed in Patent Document 1. In this technique, a leaching residue slurry can be fed in a location relatively away from the water's edge by changing a swinging action of the discharge pipe.

### PRIOR ART DOCUMENTS

### PATENT DOCUMENTS

Patent Document 1: JP-A-2001-059213

### SUMMARY OF THE INVENTION

### PROBLEMS TO BE SOLVED BY THE INVENTION

In the technique in the Patent Document 1, the location where the solidified processed soil is poured is limited, and thus sufficient feeding of a leaching residue slurry into the center of the dam or the like is difficult even if this technique is employed in the piping that discharges a leaching residue slurry into a dam or the like.

An object of the present invention, upon concerning the abovementioned problems, is to provide a facility for discharging a leaching residue slurry that can effectively utilize a storage pond in its entirety for storage of the leaching residue slurry.

### MEANS FOR SOLVING THE PROBLEMS

A facility for discharging a leaching residue slurry according to a first aspect of the invention is a facility for discharging a leaching residue slurry into a storage pond and includes a discharge unit that includes a floating member floating on a water surface of the storage pond and discharges a leaching residue slurry, and a feeding unit that feeds the leaching residue slurry to the discharge unit.

A facility for discharging a leaching residue slurry according to a second aspect of the invention is that the discharge unit in addition to the first aspect includes a discharge port that discharges a leaching residue slurry and is arranged to be positioned over a water surface of the storage pond.

A facility for discharging a leaching residue slurry according to a third aspect of the invention is that the feeding unit in the first or second aspect of the invention includes fixed piping installed around the storage pond, and connection piping that connects between the fixed piping and the discharge unit. The connection piping includes a plurality of floats that floats on the water surface of the storage pond.

A facility for discharging a leaching residue slurry according to a fourth aspect of the invention is that the fixed piping in the third aspect of the invention is provided around the storage pond and includes a plurality of flow out portions connectable to the connection piping.

A facility for discharging a leaching residue slurry according to a fifth aspect of the invention is that the plurality of floats in the third or fourth aspect of the invention are attached to one another so that adjacent floats move closer to and apart from each other along an axial direction of the connection piping. The plurality of floats include a coupling mechanism with which one end of a float and an opposing end of an opposing float are coupled to and separated from each other. The coupling mechanism includes a float moving unit that moves the floats along the connection piping and a float fixing unit that fixes movement of the connection piping in a radial direction when the floats come closer to one another.

A facility for discharging a leaching residue slurry according to a sixth aspect of the invention is that the float fixing unit in the fifth aspect of the invention includes a protrusion provided on the one end of the float and a recess provided on the opposing end of the opposing float. The float and the opposing float are to be fixed to each other as the floats come closer and the protrusion fits to the recess.

A facility for discharging a leaching residue slurry according to a seventh aspect of the invention is that the float moving unit in the fifth or sixth aspect of the invention has a function that moves one of the floats attached on a base end of the connection piping along the connection piping, and one of the floats positioned at a tip end of the connection piping is fixed to the connection piping.

A facility for discharging a leaching residue slurry according to an eighth aspect of the invention is that the float moving unit in the fifth or sixth aspect of the invention has a function that moves one of the floats attached on a tip end of the connection piping along the connection piping, and one of the floats positioned at a base end of the connection piping is fixed to the connection piping.

A facility for discharging a leaching residue slurry according to a ninth aspect of the invention is that the floats, in any one of the fifth to eighth aspects of the invention, each have a buoyancy that can keep the connection piping in a floating condition. The floats are attached to the connection piping so that a central axis of the connection piping is positioned above a center of gravity of the floats.

A facility for discharging a leaching residue slurry according to a tenth aspect of the invention is that the floats, in any one of the fifth to eighth aspects of the invention, each have a buoyancy that can keep the connection piping in a floating condition. The floats each have a passage hole passing through between both ends thereof and having an inner diameter larger than an outer diameter of the connection piping. The floats are attached to the connection piping in such a manner that the passage holes receive the connection piping.

A facility for discharging a leaching residue slurry according to an eleventh aspect of the invention is that the discharge unit in any one of first to tenth aspects of the invention includes a plurality of discharge ports disposed so that the axes of the discharge ports are non-parallel with one another.

A facility for discharging a leaching residue slurry according to a twelfth aspect of the invention is that the discharge unit in any one of the first to eleventh aspects of the invention includes a discharge pipe that is swingable as a tip end of the discharge unit swings about a base end of the discharge unit, the base end acting as a fulcrum.

A facility for discharging a leaching residue slurry according to a thirteenth aspect of the invention is that the leaching residue slurry in any one the first to twelfth aspects of the invention is slurry containing a leaching residue produced when nickel is leached from nickel oxide ore.

### EFFECTS OF THE INVENTION

According to the first aspect of the invention, the discharge unit can be positioned in a desired location in a storage pond by moving the discharge unit on a water surface of the storage pond because the discharge unit floats on the water surface of the storage pond by the floating member. This allows an effective use of the storage pond from a water's edge to a center part of the storage pond as an area for storage of leaching residue slurry.

According to the second aspect of the invention, the discharge port of the discharge unit is prevented from being buried in the leaching residue slurry because the discharge port is arranged to be placed above the water surface of the storage pond.

According to the third aspect of the invention, the discharge unit can move easily as the connection piping is provided with floats.

According to the fourth aspect of the invention, the discharge unit can be placed all over the storage pond by changing a flow out portion of the fixed piping to which the connection piping is connected, without extending a length of the connection piping.

According to the fifth aspect of the invention, movements of floats in the axial direction and the radial direction of the connection piping are fixed by coupling the floats with one another by means of the coupling mechanism. That is, the plurality of floats can be formed into a single stick shape. Movement of the discharge unit allows the floats of single stick shape to move about the base end of the connection piping that acts as a fulcrum. In this movement, adjacent floats are firmly fixed to each other by the float fixing unit of the coupling mechanism, so that the floats can resist against force applied from a lateral direction. This prevents damage of the connection piping caused by deformation thereof when the connection piping is moved or swung. Therefore, this makes it possible to easily level a mountain of slurry deposit present in a swing area of the connection piping by simply swinging the connection piping, leading to an efficient feeding of the leaching residue slurry. In addition, leveling and thus flattening the mountain allows uniform deposition of slurry deposit in a storage pond, resulting in an effective use of the storage pond in its entirety as an area for storing the leaching residue slurry.

According to the sixth aspect of the invention, adjacent floats can be coupled continuously as the protrusion and the recess of the float fixing unit are fitted to each other.

According to the seventh and eighth aspects of the invention, the floats can be easily formed into a stick shape by moving a particular float by means of the float moving unit.

According to the ninth aspect of the invention, damage of the connection piping caused by a slurry deposit can be prevented since the connection piping is allowed to float as it is placed on upper parts of the floats.

According to the tenth aspect of the invention, damage of the connection piping caused by a slurry deposit can be prevented by the floats coupled to one another because the floats can cover the connection piping.

According to the eleventh aspect of the invention, deposition of a leaching residue slurry in a single location is prevented since the leaching residue slurry is discharged in various locations from the plurality of discharge ports of the discharge unit.

According to the twelfth aspect of the invention, there is provided a large or extended area in which a leaching residue slurry is discharged, which prevents the leaching residue slurry from being deposited in one location.

According to the thirteenth aspect of the invention, efficiency of processing the leaching residue slurry can be improved since slurry containing a leaching residue after nickel is leached from nickel oxide ore is stored in a storage pond efficiently.

### BRIEF DESCRIPTION OF THE DRAWINGS

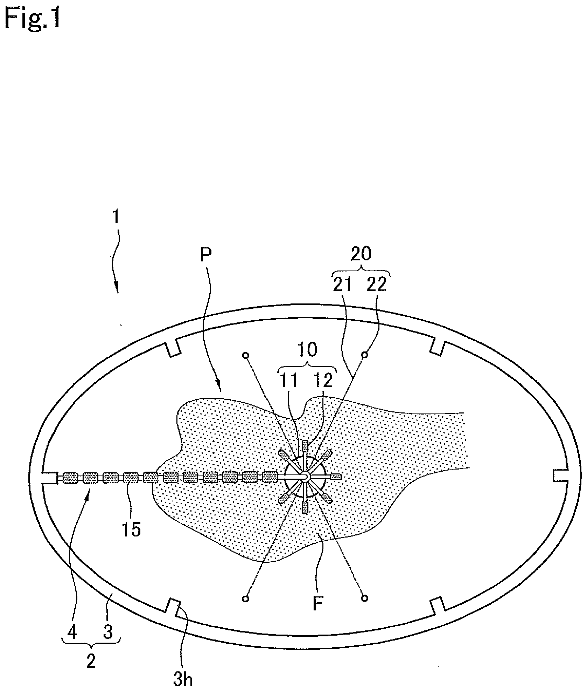

Fig. 1 is a schematic plane view of a discharge facility 1 according an embodiment of the present invention.

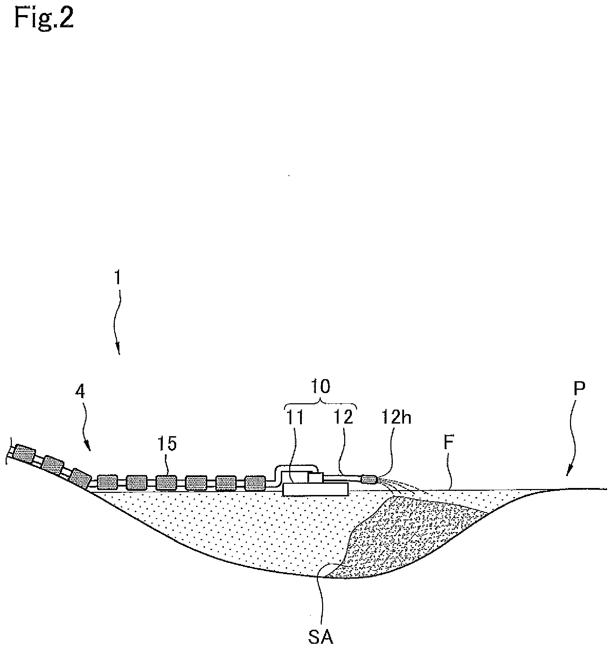

Fig. 2 is a schematic cross sectional view of the discharge facility 1 according to the embodiment.

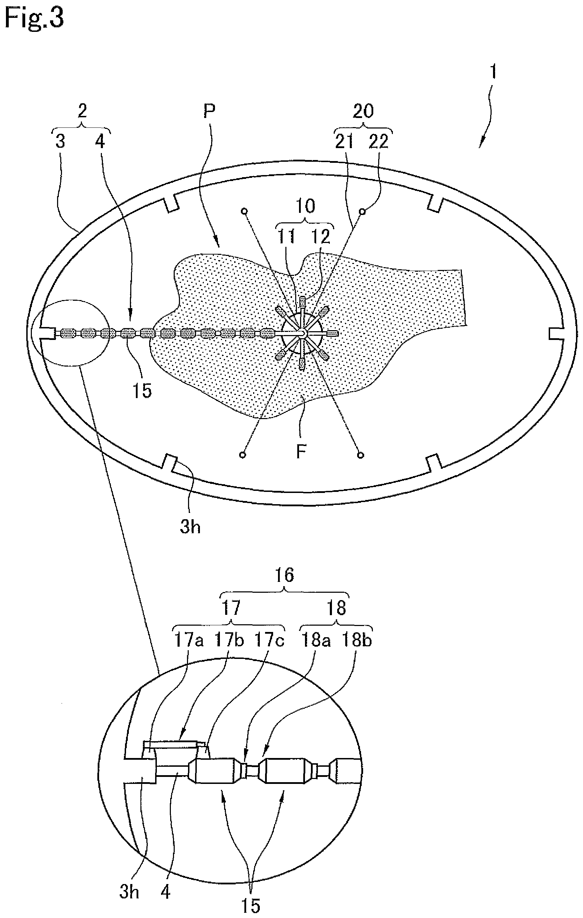

Fig. 3 is a schematic plane view of the discharge facility 1 according to the embodiment.

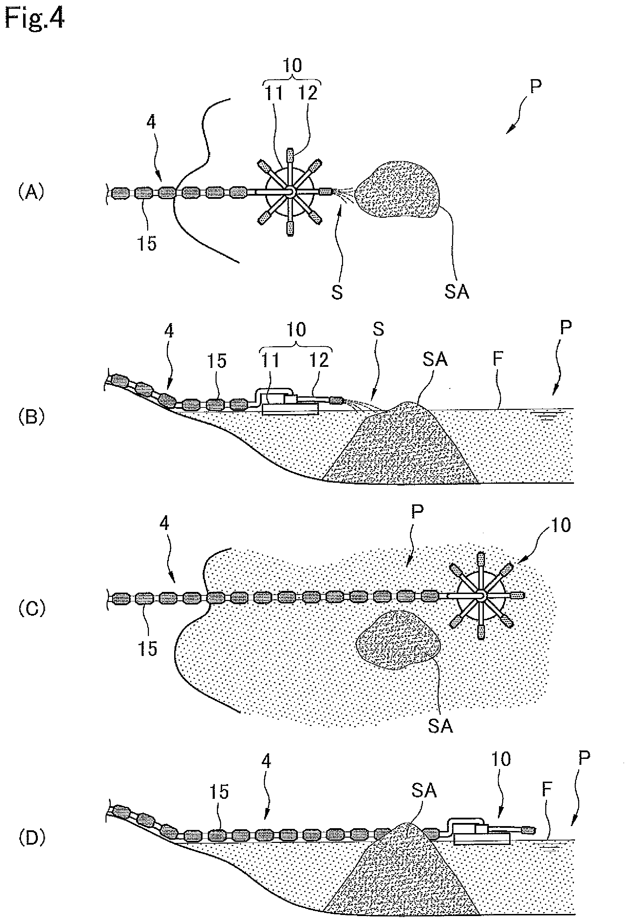

Figs. 4(A) to 4(D) each are a schematic explanatory view showing a situation where the discharge facility 1 is used according to the embodiment, Fig. 4(A) is a schematic plane view showing that a leaching residue slurry S is being fed into a storage pond P, Fig. 4(B) is a schematic cross sectional view of Fig. 4(A), Fig. 4(C) is a schematic plane view showing a state where a discharge unit 10 is moved closer to the center of a storage pond P than to a mountain of a slurry deposit SA of the leaching residue slurry S, and Fig. 4(D) is a schematic cross sectional view of Fig. 4(C).

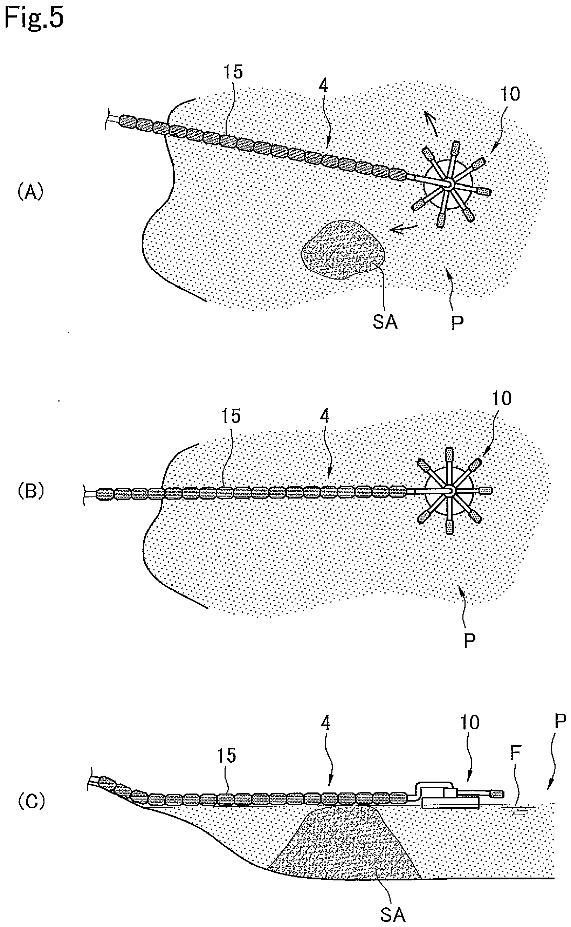

Fig. 5(A) is a schematic plane view showing a situation where a mountain of a slurry deposit SA is to be broken while floats 15 of the discharge facility 1 of the embodiment shown in Fig. 4(C) is coupled to one another by a coupling mechanism 16, Fig. 5(B) is a schematic plane view showing a situation where the mountain of slurry deposit SA has been broken, and Fig. 5(C) is a schematic cross sectional view thereof.

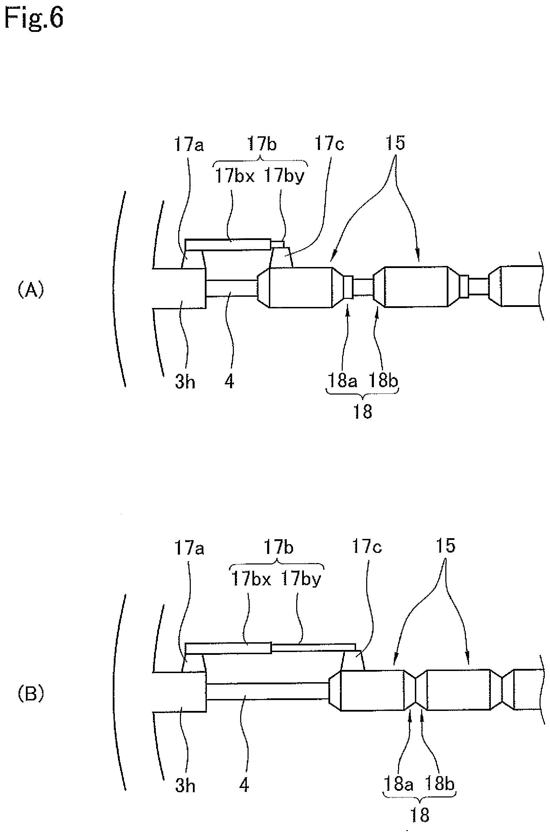

Figs. 6(A) and 6(B) each are a schematic explanatory view showing the coupling mechanism 16 of the discharge facility 1 according to the present embodiment provided adjacent a base end of a connection piping 4, Fig. 6(A) is a schematic plane view showing a situation where adjacent floats 15 are spaced apart from each other, and Fig. 6(B) is a schematic plane view showing a situation where the floats 15 are coupled to each other.

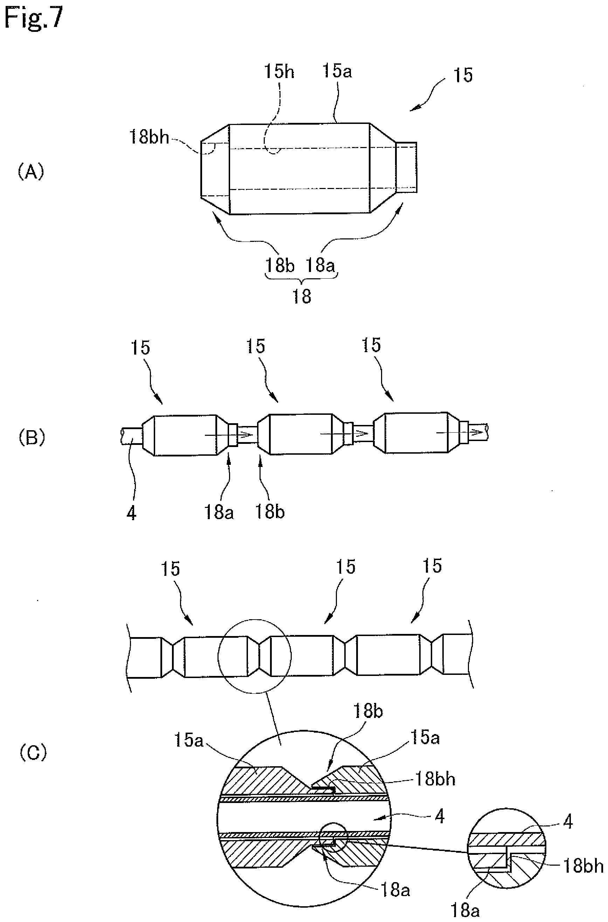

Fig. 7(A) is a schematic plane view showing a float 15 of the discharge facility 1 of the embodiment, Fig. 7(B) is a schematic side elevation view showing a situation where the floats 15 are spaced apart from one another along the connection piping 4, and Fig. 7(C) is a schematic side elevation view and a primary schematic cross sectional view showing a situation where the floats 15 abut with one another along the connection piping 4.

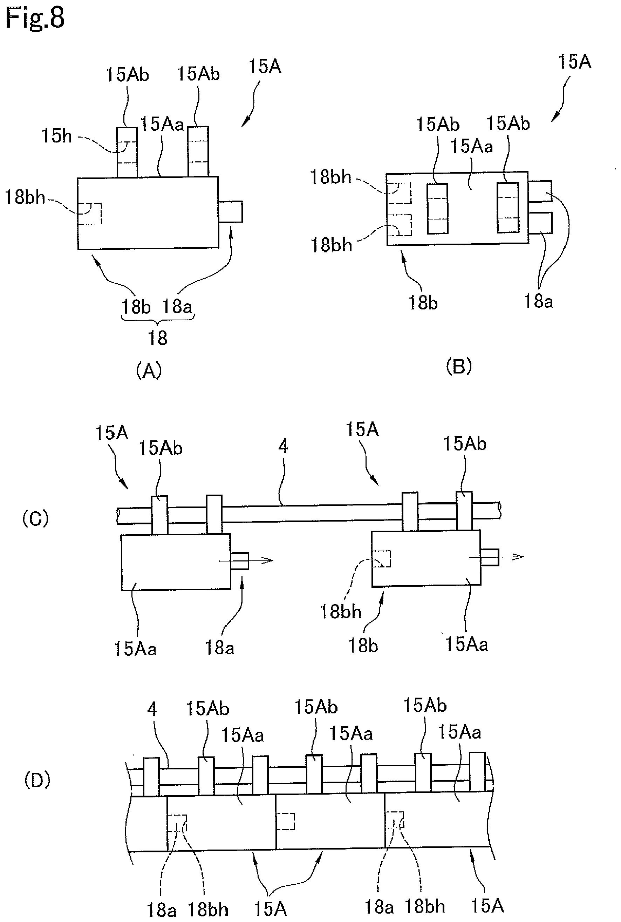

Figs. 8(A) to 8(D) each are a schematic explanatory view of other floats 15A of the discharge facility 1 according to the embodiment, Fig. 8(A) is a schematic side elevation view, Fig. 8(B) is a schematic plane view, Fig. 8(C) is a schematic side elevation view showing a situation where adjacent floats 15A being apart from each other, and Fig. 8(D) is a schematic side elevation view showing a situation where the floats 15A are coupled to one another.

### Mode for Carrying Out the Invention

A facility for discharging a leaching residue slurry according to an embodiment of the present invention is to discharge, into a storage pond, a leaching residue slurry containing a leaching residue produced when valuable metal is leached and processed from ore. The facility is able to feed the leaching residue slurry into the storage pond effectively.

The leaching residue slurry that can be processed by the facility of the embodiment includes any type of slurry containing a leaching residue produced when valuable metal is leached and processed from ore. The ore that can be leached and processed, as well as the valuable metal that can be leached, are not restricted to any particular types. Thus, the leaching residue slurry can includes, for example, slurry containing a leaching residue that is produced when nickel is leached from nickel oxide ore under a high temperature and high pressure operation using acid.

A storage pond into which a leaching residue slurry is discharged from the facility for discharging a leaching residue slurry according to the embodiment (i.e., a site into which the leaching residue slurry is stored) can include any sites that can store the same volume of water as the leaching residue slurry to be fed.
Such sites include a typical tailing dam, reservoir, and landfill.

### (Discharge facility 1 for leaching residue slurry S according to the embodiment)

In Figs. 1 to 5(C), reference numeral P indicates a storage pond into which a leaching residue slurry S is discharged from a discharge facility 1 for discharging a leaching residue slurry S, according to the embodiment, and is stored. A moisture content of the leaching residue slurry S is separated from the slurry as a solid content of the slurry S precipitates while the slurry S is stored in the storage pond P.

Reference numeral SA in Figs. 2, 4(A) to 4(D), and 5(A) to 5(C) indicates the solid content of the leaching residue slurry S (slurry deposit SA).

As shown in Fig. 2, a slurry deposit SA deposits on a bottom of the storage pond P as leaching residue slurry S is fed into the storage pond P. The discharge facility 1 for discharging a leaching residue slurry S according to the embodiment can change a location where the slurry deposit SA is deposited since the discharge facility 1 for discharging a leaching residue slurry S has a structure below. This structure can prevent the slurry deposit SA from being deposited biasedly in the storage pond P, which allows an effective use of the entire storage pond P for storage of the slurry deposit SA.

Reference numeral 3 in Fig. 1 indicates fixed piping of a feeding unit 2 of the discharge facility 1 for discharging the leaching residue slurry S according to the embodiment. The fixed piping 3 is piping for fluidly conveying the leaching residue slurry S and is in fluid communication with a slurry press-feeding unit, not shown, that feeds the leaching residue slurry S to the fixed piping 3.

The fixed piping 3 is disposed along a circumference of the storage pond P so as to surround the pond P. The fixed piping 3 includes a plurality of flow out portions 3h in a radial direction thereof. Each of the plurality of flow out portions 3h has a valve, and with the valve opened, the leaching residue slurry S inside the fixed piping 3 can be discharged externally.

The circumference of the storage pond in this description includes in its concept a shore of the storage pond P as well as a ground continuing from the periphery of the shore. In addition, the ground includes a site that is located on a border between a water surface and the ground and that appears on a location internally of the ground with respect to the shore when a water level of the storage pond P rises.

### (Connection piping 4)

One of the plurality of flow out portions 3h is connected to a base end of a connection piping 4. The connection piping 4 is made of flexible piping that bends freely and receives a leaching residue slurry S that is fluidly conveyed there-through. The connection piping 4 is provided with a plurality of floats 15 floating on a water surface F of the storage pond P.

### (Float 15)

The plurality of floats 15 are attached side by side to the connection piping 4 along an axial direction of the connection piping 4. Each of the floats 15 is made of a member having buoyancy of a typical float. With this arrangement, almost all part of the connection piping 4 displaced on the water surface F of the storage pond P can be kept floating on the water surface F of the storage pond P or part of the connection piping 4 can be kept slightly sinking below the water surface F of the storage pond P.

More specifically, the floats 15 are arranged to provide a buoyancy such that almost all part of the connection piping 4 is kept floating on the water surface or part of the connection piping 4 is kept slightly sinking below the water surface, even when the leaching residue slurry S fed from the fixed piping 3 is flowing through the connection piping 4.

In other words, the plurality of floats 15 is arranged to generate a buoyancy that allows the connection piping 4 to float on the water surface even when the floats 15 receive the weight of both the connection piping 4 and the leaching residue slurry S.

The plurality of floats 15 may be attached to the connection piping 4 only to some part thereof that is placed on the water surface F of the storage pond P, when the storage pond P is viewed from above. Generally, the water level of the storage pond P rises year by year and the water surface F eventually reaches an ground, in the future, with respect to the current shore. Thus, as shown in Fig. 1 or Fig. 3, attachment of the plurality of floats 15 to an almost all part of the connection piping 4 allows placement of almost all part of the piping 4 on or near the water surface of the storage pond P when the water surface F appears on the inland. In addition, this attachment clearly defines a location of a corresponding flow out portion 3h because the connection piping 4 near the corresponding flow out portion 3h can be disposed on or near the water surface of the storage pond P, providing easy monitoring and repair of the fixed piping 3 and the connection piping 4.

### (Discharge unit 10)

As shown in Figs. 1 to 5(C), a discharge unit 10 is provided to a tip end of the connection piping 4.

The discharge unit 10 includes a floating member 11 floating on the water surface F of the storage pond P and discharge pipes 12 provided on the floating member 11.

Each discharge pipe 12 has a base end that is in communication with a tip end of the connection piping 4 and is provided with an arrangement by which the leaching residue slurry S, fed from the connection piping 4, is discharged through a discharge port 12h of the discharge pipe 12.

The floating member 11 is made of a typical float, buoy, or the like, and is arranged to keep the discharge pipes 12 floating on the water surface F of the storage pond P. More specifically, the floating member 11 is arranged to generate a buoyancy that can keep the discharge ports 12h, at tip ends of the discharge pipes 12, onto the water surface F of the storage pond P even when the leaching residue slurry S fed from the connection piping 4 is being discharged from a discharge port 12h at a tip end of a corresponding discharge pipe 12. That is, the floating member 11 generates a buoyance force that allows the discharge pipes 12 to float on the water surface even when both the floating member 11 receives the weight of the discharge pipe 12 and the leaching residue slurry S inside the discharge pipe 12.

Accordingly, the leaching residue slurry S can be discharged from the discharge port 12h of the discharge pipe 12 to the storage pond P as a discharge unit 10 is placed on a location where the leaching residue slurry S should be deposited before the leaching residue slurry S is fed to the discharge pipe 12 of the discharge unit 10 from the fixed piping 3 via the connection piping 4.

With the structure of the discharge unit 10 described above, the discharge unit 10 can move following the height of a water surface F of the storage pond P even when the height of the water surface F rises or descents caused by the storage pond P with increased or decreased amount of water being stored. Accordingly, the discharge port 12h at the tip end of the discharge pipe 12 is always kept above the water surface F of the storage pond P.

In addition, not only the discharge unit 10 but also the connection piping 4 moves following the height of the water surface F of the storage pond P since the connection piping 4 is made of flexible piping provided with the floats 15. Thus, the leaching residue slurry S can be fed constantly from the connection piping 4 to the discharge unit 10.

The connection piping 4 may not necessarily be provided with floats 15, though the connection piping 4 in the example described above is provided with the floats 15 and is arranged to float on or slightly sink below the water surface F of the storage pond P.

The connection piping 4 may not be provided with floats 15 when fluidly conveyance of the leaching residue slurry S is not affected by a connection piping 4 that is sunk while, for example, a discharge unit 10 is placed near the water's edge. Obviously, floats 15 are unneeded if the connection piping 4 has a sufficient buoyancy that can keep, by itself, the connection piping 4 floating on the water surface F of the storage pond P.

Preferably, the facility 1 for discharging a leaching residue slurry S according to the embodiment has a structure that includes a coupling mechanism 16 to be described below.

Specifically, as shown in Figs. 4 (A) and 4 (B), there is formed a mountain of the slurry deposit SA in the storage pond P as the slurry deposit SA deposits on a bottom of the storage pond P while the leaching residue slurry S is fed into the storage pond P. Particularly, a leaching residue slurry S of ore as a raw material does not move and remains around the discharge unit 10 because of its high specific gravity, whereby the slurry deposit SA is provided around the discharge unit 10. A mountain of the slurry deposit SA is formed in a relatively short time of period as the amount of the leaching residue slurry S increases.

Such a mountain of the slurry deposit SA has to be broken periodically for the sake of a discharge operation of the leaching residue slurry S, and such operation has to be carried out manually, requiring a lot of labor with seriously reduced work efficiency. In addition, the discharge operation of the leaching residue slurry S has to be terminated during the operation of leveling the mountain of the slurry deposit SA.

The facility 1 for discharging a leaching residue slurry S according to the embodiment has a structure including the coupling mechanism 16 of below, so that it becomes possible to easily level a mountain (mountain of the slurry deposit SA) formed by a deposit of the leaching residue slurry S fed into the storage pond P. This can sufficiently shorten an operation time for leveling the mountain of the slurry deposit SA compared to a conventional method, thereby improving feeding efficiency of the leaching residue slurry S.

In addition, the facility 1 for discharging a leaching residue slurry S according to the embodiment allows an effective use of the storage pond P, in its entirety, for storage of the slurry deposit SA since the facility 1 for discharging a leaching residue slurry S can deposit the slurry deposit SA in the storage pond P uniformly (see Fig. 5 (C)).

The coupling mechanism 16 will be described below in detail.

### (Coupling mechanism 16)

The coupling mechanism 16 is configured to cause the plurality of floats 15, attached side by side to a connection piping 4 in an axial direction thereof, move closer to and apart from one another. That is, adjacent floats 15 of the plurality of floats 15, being attached to the connection piping 4, are arranged to move closer to and apart from each other by the coupling mechanism 16.

More specifically, adjacent floats 15 are arranged to move until they come to closer and coupled to each other (coupled position) (see Figs. 6(A) to 8(D)) by a float moving unit 17 of the coupling mechanism 16. Then, the adjacent floats 15 moved to the coupled position are arranged to be coupled and fixed at respective opposing ends thereof by a float fixing unit 18 of the coupling mechanism 16 (see Figs. 6(A) to 8(D)). Specifically, a relative movement of the adjacent floats 15, in the coupled position, in a radial direction of the connection piping 4 is fixed by the float fixing unit 18.

### (Method for using discharge facility 1 provided with coupling mechanism 16)

The facility 1 for discharging a leaching residue slurry S that is provided with the coupling mechanism 16, according to an embodiment, is arranged to properly feed the leaching residue slurry S into the storage pond P with a leveling operation, described below, of a mountain of the slurry deposit SA formed in the storage pond P.

For the leveling operation, first, as shown in Figs. 4 (A) and 4 (B), the leaching residue slurry S is fed into the storage pond P from a location around a shore of the storage pond P. Then, as shown in Figs. 4 (C) and 4 (D), the discharge unit 10 is disposed close to the center of the storage pond P by keeping the discharge unit 10 away from a mountain of the slurry deposit SA, when a crown portion of the mountain of the slurry deposit SA becomes higher than a water surface F of the storage pond P. In this situation, as shown in Fig. 4 (C), the discharge unit 10 is moved so that the mountain of the slurry deposit SA is positioned within a circle having a diameter that is defined by a line segment connecting between a discharge unit 10 and the base end of the connection piping 4. While the discharge unit 10 is moved, feeding of the leaching residue slurry S may be terminated, if necessary.

Then, as shown in Fig. 5 (A), adjacent floats 15 are moved closer to each other by the float moving unit 17 and are coupled together at respective opposing ends thereof by the float fixing unit 18. In this coupled position, movement of all the floats 15 in an axial direction of the connection piping 4 is fixed, and a relative movement of each of the adjacent floats 15 in a radial direction of the connection piping 4 is fixed. In this situation, the plurality of floats 15 attached to the connection piping 4 forms a single stick shape.

Then, as shown in Fig. 5 (A), movement of the discharge unit 10 toward a location where the mountain of the slurry deposit SA is present causes the plurality of floats 15, with the connection piping 4 connected to the discharge unit 10, to swing about the base end of the floats, the base end acting as a fulcrum, just like a stick that swings drawing a fan shape. In this situation, adjacent floats 15 are firmly coupled and fixed to each other by the float fixing unit 18 in the degree to resist against the force from a lateral direction. Thus, the coupling condition of the adjacent floats 15 can be maintained even when the plurality of floats 15 receive the force from a lateral direction thereof. In other words, the plurality of floats 15 can maintain its stick shape even when the connection piping 4 is moved.

Accordingly, as shown in Fig. 5 (A), the mountain of the slurry deposit SA can be mown down by the floats 15 as the connection piping 4 is moved toward the mountain of the slurry deposit SA (moved toward the arrow in the downward direction in Fig. 5 (A)). Thus, as shown in Fig. 5 (C), with such an operation repeatedly carried out, a portion of the mountain of the slurry deposit SA existing above a lower end of the floats 15 can be broken evenly.

Eventually, the slurry deposit SA can be evenly deposited in the storage pond P with such an operation that is carried out each time a mountain of the slurry deposit SA is formed, so that the storage pond P, in its entirety, can be effectively utilized for storage of the slurry deposit SA.

### (Detailed description of coupling mechanism 16)

Next, the coupling mechanism 16 of the facility 1 for discharging a leaching residue slurry S according to the embodiment will be described in detail below.

As described above, the floats 15 attached to the connection piping 4 are arranged to be coupled to and move apart from one another by the coupling mechanism 16. Specifically, the coupling mechanism 16 is a mechanism that causes adjacent floats 15 being separated from each other to come closer to each other and causes the floats 15 to maintain in such a manner that one end of a float 15 and an opposing end of an opposing float 15 are coupled to each other.

As described above, the coupling mechanism 16 includes the float moving unit 17 that causes the floats 15 to move closer to and apart from each other and the float fixing unit 18 that couples and fixes abutting floats 15 to each other.

### (Float moving unit 17)

First, the float moving unit 17 of the coupling mechanism 16 will be described.

The float moving unit 17 of the coupling mechanism 16 is not restricted to any particular construction as far as it has a function to cause the floats 15 to move closer to and apart from one another. Thus, as examples, the float moving unit 17 can employ an arrangement that has a function to move a float 15 attached on the base end of the connection piping 4 (the float 15 positioned nearest to the flow out portion 3h in Fig. 3) axially toward the tip end of the connection piping 4, and, contrary, employ an arrangement that has a function to move a float 15 attached on the tip end of the connection piping 4 axially toward the base end of the connection piping 4.

In the former arrangement, the float 15 positioned at the tip end of the connection piping 4 (the float 15 positioned near the discharge unit 10 in Fig. 3) is fixed to the connection piping 4, while in the latter arrangement, on the other hand, the float 15 positioned at the base end of the connection piping 4 is fixed to the connection piping 4.

In the description below, the former arrangement will be taken as a representative of the float moving unit 17 of the coupling mechanism 16. That is, the arrangement in which the float 15 attached on the base end of the connection piping 4 is moved along an axial direction of the connection piping will be described with reference to the drawings.

As shown in Figs. 3, 6(A), and 6(B), the connection piping 4 is provided at a base end thereof with the float moving unit 17 of the coupling mechanism 16 of the facility 1 for discharging a leaching residue slurry S according to the embodiment.
Specifically, there is provided the float moving unit 17 that has a base end coupled to a flow out portion 3h and a tip end coupled to a float 15 and that is arranged to move the float 15 along an axial direction of the connection piping 4.

### (Moving portion 17b)

The float moving unit 17 includes a moving portion 17b that moves the abovementioned float 15 along an axial direction of the connection piping 4. The moving portion 17b is coupled to the fixed piping 3 and the float 15 by attaching portions 17a, 17c and is arranged to expand and contract between the attaching portions 17a, 17c. The moving portion 17b may employ a cylinder mechanism such as a known hydraulic or air cylinder, an electromagnet, and the like. The moving portion 17b may be controlled by a controller electrically connected, not shown, or may be controlled manually.

With the structure described above, expansion of the moving portion 17b is able to hold the positon of the floats 15, with the floats being moved in a direction of the tip end of the connection piping 4. In this position, the floats 15 adjacent to one another are biased toward the tip end of the connection piping 4 with opposing ends of adjacent floats 15 being coupled to each other. In other words, the coupled position the floats 15 can be firmly held still as far as the moving portion 17b expands and maintains its expanded position.

In this position, the floats 15 can easily level even a mountain of the slurry deposit SA formed with the leaching residue slurry S of high density since the floats 15 are able to resist more successfully against the force applied from a lateral direction of the connection piping 4.

Only contraction of the moving portion 17b is necessary to release the floats 15 that are in the coupled position. That is, the plurality of floats 15 being coupled or uncoupled can be changed to the floats 15 uncoupled or coupled by merely a contraction or expansion operation of the moving portion 17, which can provide an improved operation of the plurality of floats 15. In addition, any desired float 15 can be repaired on the water surface F of the storage pond P by overlooking and adjusting the position of the float 15 since the floats 15 are moved apart from one another by merely contracting the moving portion 17.

The number and the location of the moving portion 17b can be adjusted depending on the length of the connection piping 4 and/or the number and/or dimension of the floats 15 to be attached to the connection piping 4. In Fig. 6, for example, an extra moving portion 17b may be additionally provided to a location opposite the original moving portion 17b over the connection piping 4, or may be additionally provided so as to connect between the upper parts of the flow out portion 3h and the float 15 (in the front side position in the sheet of Fig. 6).

In addition, the moving portion 17b may be connected to the attaching portions 17a, 17c via ball joints. This makes the moving portion 17b swingable following a swing motion of the connection piping 4 and makes the floats 15 come closer to one another even when the connection piping 4 is bent and angled in some degree with respect to the flow out portion 3h. In particular, with such a structure where the moving portion 17b is provided to connect between the flow out portion 3h and the float 15, it is possible to provide a broader area in which the connection piping 4 can swing, which thus can provide a function of leveling mountains of the slurry deposit SA formed in the broader area.

The float moving unit 17 may be provided with a separation prevention member connecting adjacent floats 15. The separation prevention member is a string-like member and may be made of a material that can be bent freely. Provision of a separation prevention member between adjacent floats 15 allows the floats 15 to be positioned with predetermined distances when the floats 15 are separated from one another. This arrangement allows the connection piping 4 to float generally horizontally in the storage pond P, so that a leaching residue slurry S fed from the fixed piping 3 can smoothly pass through the connection piping 4.

### (Float fixing unit 18)

The float fixing unit 18 is arranged to couple and fix adjacent floats 15 together and is not restricted to any particular structure as far as it has a function to fix a movement of the connection piping 4 in a radial direction while the adjacent floats 15 abut to each other.

Preferably, the float fixing unit 18 has a mating structure in adjacent floats 15 with which the adjacent floats 15 mate to each other. With such a structure, movement of the connection piping 4 in the radial direction can be more firmly fixed when the floats 15 are coupled to one another, because no or a little gap is formed between the floats 15. For such a structure of the float fixing unit 18, there may be employed a protrusion 18a provided on an end of a float 15 and a recess 18b provided on an opposing end of an opposing float 15 in the adjacent floats 15. In other words, as shown in Fig. 7 (A), each float 15 is provided with a protrusion 18a of the float fixing unit 18 at one end thereof and a recess 18b of the float fixing unit 18 at the other end thereof, in an axial direction of the connection piping 4.

The protrusion 18a and the recess 18b of the float fixing unit 18 are not restricted to any particular shape and position to be formed as far as they are formed to mate to each other. Specifically, each float 15 is provided with a recess 18b (for example, the recess 18b of the float 15 in the center in Fig. 7 (B)) at a location where a protrusion 18a of an opposing float 15 (for example, the protrusion 18a of the float 15 in the leftmost in Fig. 7 (B)) makes contact, when adjacent floats 15 abut to each other at their ends.

The recess 18b is provided with an accommodation part 18bh for receiving the protrusion 18a.

The accommodation part 18bh of the recess 18b is not particularly restricted to any particular shape or dimension as far as it is formed to receive the protrusion 18a. For example, the accommodation part 18bh may have an inner peripheral edge that is substantially similar in shape to a cross section of the protrusion 18a and may have a dimension that is the same as or slightly smaller than the protrusion 18a (for example, the cross section is substantially circular in Fig. 7 and substantially rectangular in Fig. 8).

In addition, the accommodation part 18bh is not restricted to have any particular depth as far as it is formed to receive a part or entirety of the protrusion 18a. For example, the accommodation part 18bh may be formed to have a depth that is the same as or slightly greater than the distance between a tip end and a base end of the protrusion 18a (see Fig. 5 (C)). Employment of such an arrangement can provide an improved coupling strength between the protrusion 18a and the recess 18b as a gap between an outer surface of the protrusion 18a and an inner surface of the accommodation part 18bh of the recess 18b can be minimized and a contact area between them can be increased.

Since the float fixing unit 18 has such a mating structure described above, abutment of adjacent floats 15 can provide a fitting relation between a protrusion 18a of a float 15 provided on an end of the float 15 and a recess 18b provided on an end of an opposing float 15 with a minimal or no gap between them.

This sufficiently fixes movement of adjacent floats 15 in a radial direction of the connection piping 4, i.e., movement of the connection piping 4 in a lateral direction.

Accordingly, as shown in Fig. 5 (A), damage of the connection piping 4 caused by deformation thereof can be prevented as the floats 15 coupled in a stick shape can resist against the force laterally applied to the connection piping 4 when the connection piping 4 is swung.

### (Float 15)

The float 15 is made of a member having a buoyancy that lifts the float and others and is not restricted to any particular structure as far as it has a structure to be attached to the connection piping 4 along an axial direction of the connection piping 4.

### (Cylindrical float 15)

As shown in Figs. 7(A) to 7(C), the float 15 is a member of a cylindrical shape, for example, and may have a passage hole 15h that passes through between both ends of the float 15. The passage hole 15h receives the connection piping 4. A float 15 provided with such an arrangement exhibits the advantages that follow.

As shown in Fig. 7, abutment of adjacent floats 15 allows the floats 15 to cover the surface of the connection piping 4. Then, as shown in Fig. 5(B), the surface of the connection piping 4 covered by the floats 15 can be prevented from any damage caused by a slurry deposit SA (for example, damage caused by a sharp solid substance contained in the slurry deposit SA) when the discharge unit 10 is moved about a base end of the connection piping 4, the base end acting as a fulcrum, and the connection piping 4 is moved toward a mountain of the slurry deposit SA.

### (Rectangular float 15A)

Although the exemplified float described above has a cylindrical shape, the float is not restricted to such a structure. Thus, the float 15A having a structure shown in Figs. 8(A) to 8(D), for example, may be employed.

As shown in Figs. 8(A) to 8(D), the float 15A includes a body part 15Aa of a rectangular shape and a piping attachment part 15Ab for attachment to the connection piping 4. The body part 15Aa is larger than an outer diameter of the connection piping 4 in a width direction thereof (the vertical direction in Fig. 8(B)). The body part 15Aa can be three to five times larger than the outer diameter of the connection piping 4, for example. The body part 15Aa is provided with the piping attachment part 15Ab on a substantially central upper surface thereof.

Thus, side sections of the body part 15Aa project, in some degree, in a direction substantially perpendicular to an axial direction of the connection piping 4 when the float 15A is attached to the connection piping 4 (see Fig. 8(B)). Thus, the body part 15Aa of the float 15A can level a mountain of a slurry deposit SA by the side sections before the slurry deposit SA comes to contact with the connection piping 4, when adjacent floats 15A abut to each other and the connection piping 4 is swung toward the mountain of the slurry deposit SA, like in the case of the cylindrical floats 15. This can prevent any damage of the connection piping 4 caused by the slurry deposit SA.

In addition, the float 15A can be removed easily from the connection piping 4 as it is attached to the connection piping 4 merely by the piping attachment part 15Ab, which advantageously results in an easy removal and replacement of the float 15A. In addition, it is advantageous that replacement and repair of the float 15 can be carried out during a flowing operation of a leaching residue slurry S through the connection piping 4. Furthermore, the connection piping 4 can be moved easily by cutting away or detaching a float 15 when the float 15 is stuck to a slurry deposit SA.

### (Discharge unit 10)

The discharge unit 10 will be described below in detail.

As described above, the discharge unit 10 is coupled to an tip end of the connection piping 4, and includes the floating member 11 and the discharge pipes 12 provided on the floating member 11. The discharge unit 10 is arranged to discharge the leaching residue slurry S, fed from the connection piping 4, from the tip end of each discharge pipe 12 while the discharge unit 10 floats. Thus, the leaching residue slurry S can be discharged into a desired location of the storage pond P through the discharge port 12h of the discharge pipe 12 by placing the discharge unit 10 to the desired location in the storage pond P, where the leaching residue slurry S is to be discharged, and by feeding the leaching residue slurry S to the discharge pipe 12 of the discharge unit 10 from fixed piping 3 via the connection piping 4.

Preferably, the discharge pipe 12 is arranged to freely swing vertically or laterally led by a tip end thereof about a base end thereof as a fulcrum.

With the discharge pipe 12 having such a structure, a location in the storage pond P to which the leaching residue slurry S is discharged can be changed without changing the position of the discharge unit 10 since the orientation of the discharge port 12h can be changed freely. This provides a wider area in which the leaching residue slurry S is deposited without a frequent change of the position of the discharge unit 10, thereby preventing or restraining the leaching residue slurry S from being deposited on a particular single location.

There can be provided a plurality of discharge pipes 12. In this arrangement, it is preferable that discharge ports 12h of the discharge pipes 12 are axially directed non-parallel with one another. This prevents rapid deposition of the leaching residue slurry S on a single location since a plurality of discharge ports 12h of the discharge pipes 12 discharge the leaching residue slurry S on various locations. For example, as shown in Fig. 1 or Fig. 3, an arrangement of the plurality of discharge pipes 12 in a radial direction about the base ends thereof can provide a wide range of area around the discharge unit 10, in which the leaching residue slurry S can be deposited.

Alternatively, there may be provided only a plurality of discharge ports 12h instead of providing a plurality of discharge pipes 12, with the discharge ports 12h being directed non-parallel with one another in axial directions of the discharge ports 12h (that are directions perpendicular to opening planes of respective discharge ports 12h). This arrangement allows discharge of the leaching residue slurry S into various locations through the multiple discharge ports 12h of the discharge unit 10, thereby preventing a rapid deposition of the leaching residue slurry S on a single location. In this case, a box-like or circular plate-like discharge container may be provided, in place of the discharge pipe 12, with a plurality of discharge ports 12h provided to a side surface thereof. In this case, when the leaching residue slurry S is discharged from the plurality of discharge ports 12h, the leaching residue slurry S can be discharged around the discharge unit 10.

The discharge port 12h at the tip end of the discharge pipe 12 may not necessarily be held above the water surface F of the storage pond P, that is, the discharge port 12h of at the tip end of the discharge pipe 12 may be arranged to sink in the water. However, the discharge port 12h of the discharge pipe 12 is preferably held above the water surface F of the storage pond P as a leaching residue slurry S flowing the discharge port 12h of the discharge pipe 12 can be observed. As a method for holding the discharge port 12h of the discharge pipe 12 above the water surface F of the storage pond P, a float may be provided to a tip end of the discharge pipe 12 (i.e., near the discharge port 12h).

Even when the discharge port 12h of the discharge pipe 12 sinks in the water, the leaching residue slurry S can be discharged if the pressure discharging the leaching residue slurry S is greater than the pressure of water. In any case, the discharge unit 10 may be provided with a bypass flow path that bypasses the leaching residue slurry S. The bypass flow path can discharge the leaching residue slurry S therethrough when the pressure of water is greater than the pressure discharging the leaching residue slurry S, which prevents clogging of the discharge pipe 12 and/or the connection piping 4 caused by the leaching residue slurry S. Preferably, a slurry discharge port of the bypass flow path is provided above the water surface F of the storage pond P, though it is not restrictedly located to any particular position. Advantageously, such an arrangement leads to an early finding of clogging of the discharge pipe 12, etc., through observation of the leaching residue slurry S being discharged from the slurry discharge port of the bypass flow path.

There may be provided a plurality of discharge units 10, instead of only one. Specifically, the plurality of discharge units 10 may be connected, via a plurality of connection piping 4, to respective flow out portions 3h provided to the fixed piping 3. Employment of such an arrangement allows a concurrent discharge of the leaching residue slurry S from the plurality of discharge units 10 to the storage pond P in a plurality of locations being distanced, in some degree, to each other, resulting in an improved uniform feeding of the leaching residue slurry S into the storage pond P. The amount of the leaching residue slurry S in the fixed piping 3 may be increased in order to improve the efficiency of the process of the leaching residue slurry S with the plurality of discharge units 10.

The discharge unit 10, floating by the floating member 11 on the water surface F of the storage pond P, can move by wind or the like. This might bring an improper discharge of the leaching residue slurry S into the storage pond P with the slurry S being discharged to an improper location, which might result in an improper uneven deposit of the leaching residue slurry S in the storage pond P.

Thus, as shown in Fig. 1 or 3, it is desired to provide a fixing unit 20 that fixes the discharge unit 10 to a shore or the like. The fixing unit 20 may be configured to include, for example, a rope 21 that has one end connected to the discharge unit 10 and a fixing tool 22 that is connected to the other end of the rope 21. Provision of the fixing unit 20 can limit, in some degree, movement of the discharge unit 10, which has been disposed in a predetermined location, after the fixing tool 22 is fixed to a shore or fixed piping 3. As shown in Fig. 1 or 3, in order to firmly fix, there may be provided two or more ropes 21 to thereby limit movement of the discharge unit 10 with two or more locations.

In addition, the fixing unit 20 being provided as described above may be used as a means to move a discharge unit 10. For example, moving a corresponding end of the rope 21 toward a shore causes the discharge unit 10 to be pulled and moved via the rope 21.

Means to move the discharge unit 10 is not restricted to any particular arrangement and includes, in addition to the method described above, a driving unit (an apparatus etc., including a screw, a steer, and the like) that is remotely controlled and moves a discharge unit 10.

### (Fixed piping 3)

As described above, the fixed piping 3 that is provided with a plurality of flow out portions 3h and is placed around the circumference of the storage pond P can advantageously improve the degree of freedom of the location where a discharge unit 10 is placed. Specifically, switching a flow out portion 3h to which connection piping 4 is connected allows a discharge unit 10 to be located in a wider area, even the connection piping 4 has a constant length. In this case, the connection piping 4 is provided with a length that allows the discharge unit 10 to reach the center of the storage pond P whatever the connection piping 4 is connected to any one of the flow out portions 3h. Provided with such an arrangement, the discharge unit 10 can be placed all over the area of the storage pond P with the connection piping 4 provided with a length not so long.

### (Connection piping 4)

Although in the example above, the connection piping 4 made of flexible piping is described, the connection piping 4 is not restricted to such piping as far as it can bend in some degree. For example, the connection piping 4 may include a structure in which a plurality of piping not easily deformed (i.e., with low plasticity) are coupled with one another via a plurality of flexible joints, or a structure in which a flexible joint is provided to a connection part between a flow out portion 3h and a connection piping 4 of low plasticity. Advantageously, those structures are provided with improved robustness and durability as they are configured by materials of greater strength except the joints, though they have less degree of freedom compared to the flexible piping.

In addition, the structure in which the flexible joint is provided to a connection part between a flow out portion 3h and a connection piping 4 can advantageously and easily adjust a swing angle of the connection piping 4 of low plasticity and inflexibility into a desired angle.

### (Raw material of float 15 and connection piping 4)

A raw material of the float 15 is not restricted to any particular type but is preferably a type that is floaty. The raw material of the float 15 may include high polymer resin, such as styrene foam and balsawood. Particularly, high polymer resin such as polypropylene and vinyl chloride having some strength is preferably used for part of the float 15 where the leaching residue slurry S comes to contact.

Furthermore, the raw material may include biodegradable plastics such as cellulose and polylactic resin for easy disposal of a float 15 being dropped off.

A raw material forming the connection piping 4 is not restricted, either. For example, a material such as polypropylene and vinyl chloride having the density less than a leaching residue slurry S may preferably be employed.
Use of such a raw material for formation of the connection piping 4 can prevent a connection piping 4 from sinking caused by a leaching residue slurry S flowing through the connection piping 4 during a fluidly conveyance of the leaching residue slurry S.

For the connection piping 4 part of which being positioned under the water surface, there may be employed a raw material having high water resistance for the part positioned below the water surface while there may be employed a material having ultraviolet ray and oxygen resistance for part positioned above the water surface. Such employments can prevent the aging of the connection piping 4.

### INDUSTRIAL APPLICABILITY

A facility for discharging a leaching residue slurry according to the present invention is suited for a facility used to discharge a slurry, such as a leaching residue slurry or for landfill, to a storage pond or the like.

### DESCRIPTION OF REFERENCE SIGNS

- 1: facility for discharging leaching residue slurry
- 2: feeding unit
- 3: fixed piping
- 3h: flow out portion
- 4: connection piping
- 10: discharge unit
- 11: floating member
- 12: discharge pipe
- 12h: discharge port
- 15: float
- 16: coupling mechanism
- 17: float moving unit
- 18: float fixing unit
- P: storage pond
- F: water surface
- S: leaching residue slurry
- SA: slurry deposit

## Claims

1. A facility for discharging a leaching residue slurry into a storage pond, the facility comprising:
a discharge unit that includes a floating member floating on a water surface of the storage pond and discharges a leaching residue slurry; and
a feeding unit that feeds the leaching residue slurry to the discharge unit.

2. The facility for discharging a leaching residue slurry according to claim 1, wherein the discharge unit comprises a discharge port that discharges a leaching residue slurry and is arranged to be positioned over a water surface of the storage pond.

3. The facility for discharging a leaching residue slurry according to claim 1 or 2, wherein the feeding unit comprising:
fixed piping installed around the storage pond; and
connection piping that connects between the fixed piping and the discharge unit,
wherein
the connection piping includes a plurality of floats that floats on the water surface of the storage pond.

4. The facility for discharging a leaching residue slurry according to claim 3, wherein
the fixed piping is provided around the storage pond and includes a plurality of flow out portions connectable to the connection piping.

5. The facility for discharging a leaching residue slurry according to claim 3 or 4, wherein
the plurality of floats are attached to one another so that adjacent floats move closer to and apart from each other along an axial direction of the connection piping,
the plurality of floats include a coupling mechanism with which one end of a float and an opposing end of an opposing float are coupled to and separated from each other,
the coupling mechanism includes a float moving unit that moves the floats along the connection piping and a float fixing unit that fixes movement of the connection piping in a radial direction when the floats come closer to one another.

6. The facility for discharging a leaching residue slurry according to claim 5, wherein
the float fixing unit comprises a protrusion provided on the one end of the float and a recess provided on the opposing end of the opposing float, and
the float and the opposing float are to be fixed to each other as the floats come closer and the protrusion fits to the recess.

7. The facility for discharging a leaching residue slurry according to claim 5 or 6, wherein
the float moving unit has a function that moves one of the floats attached on a base end of the connection piping along the connection piping, and
one of the floats positioned at a tip end of the connection piping is fixed to the connection piping.

8. The facility for discharging a leaching residue slurry according to claim 5 or 6, wherein
the float moving unit has a function that moves one of the floats attached on a tip end of the connection piping along the connection piping, and
one of the floats positioned at a base end of the connection piping is fixed to the connection piping.

9. The facility for discharging a leaching residue slurry according to any one of claims 5 to 8, wherein
the floats each have a buoyancy that can keep the connection piping in a floating condition, and
the floats are attached to the connection piping so that a central axis of the connection piping is positioned above a center of gravity of the floats.

10. The facility for discharging a leaching residue slurry according to any one of claims 5 to 8, wherein
the floats each have a buoyancy that can keep the connection piping in a floating condition,
the floats each have a passage hole passing through between both ends thereof and having an inner diameter larger than an outer diameter of the connection piping, and
the floats are attached to the connection piping in such a manner that the passage holes receive the connection piping.

11. The facility for discharging a leaching residue slurry according to any one of claims 1 to 10, wherein
the discharge unit includes a plurality of discharge ports disposed so that the axes of the discharge ports are non-parallel with one another.

12. The facility for discharging a leaching residue slurry according to any one of claims 1 to 11, wherein
the discharge unit includes a discharge pipe that is swingable as a tip end of the discharge unit swings about a base end of the discharge unit, the base end acting as a fulcrum.

13. The facility for discharging a leaching residue slurry according to any one of claims 1 to 12, wherein
the leaching residue slurry is slurry containing a leaching residue produced when nickel is leached from nickel oxide ore.
